# EUROPEAN PATENT APPLICATION

(11) **EP 1 818 236 A2**
(43) Date of publication of application: **15.08.2007**
(21) Application number: 07001841.1
(22) Date of filing: 29.01.2007
(51) Int. Cl.: B60W 20/00, B60K 6/04, B60W 10/02

(54) **Automotive motor drive transmission control device**

(30) Priority: 08.02.2006 JP 2006031162
(71) Applicant: NTN CORPORATION, Osaka-shi, Osaka 550-0003 (JP)
(72) Inventor: Nojiri, Hiromi, c/o NTN Corporation, Iwata-shi, Shizuoka 438-0037 (JP); Okada, Koichi, c/o NTN Corporation, Iwata-shi, Shizuoka 438-0037 (JP); Saito, Takahide, c/o NTN Corporation, Iwata-shi, Shizuoka 438-0037 (JP)
(74) Representative: Behrmann, Niels

(57) **Abstract**

A clutch (60) of a type including engagement elements (9) interposed between rotatable members (4, 1) on motor and wheel sides, respectively is disposed between an electric drive motor (51) and wheels (56). This clutch (60) includes a retainer constraining mechanism (21) for selectively constraining and releasing a retainer (7) retaining the engagement elements (9) so that when the retainer (7) is constrained, rotation in any one of two directions opposite to each other can be transmitted. A rotational direction estimating unit (63) estimates the direction of rotation of the electric drive motor (51) immediately before the motor being halted during the halt of the automotive vehicle or immediately before the halt of the automotive vehicle. A clutch release unit (64) operates, when the automotive vehicle is to be started from a halted condition by means of a different drive system (41) under the two wheel drive mode, to cause the retainer constraining mechanism (21) to release the retainer (7) after the electric drive motor (51) has been driven in a direction reverse to that estimated by the rotational direction estimating unit (63), with a torque lower than that required to drive the wheels (56).

## Description

### BACKGROUND OF THE INVENTION

### (Field of the Invention)

The present invention relates to a motor drive transmission control device for a motor-driven vehicle or a four drive wheel vehicle of a kind utilizing an electric drive motor and a combustion engine and, more particularly, to the motor drive transmission control device having a clutch interposed between the electric drive motor and the vehicle wheels.

### (Description of the Prior Art)

In recent years, gas-electric hybrid, four wheel drive cars of a type, in which a combustion engine and an electric drive motor are selectively used to drive front wheels and rear wheels, have come to be actively developed. In those motor driven cars, a clutch is generally employed in the drive transmission system between the electric drive motor and the wheels for protecting the electric drive motor from being rotated at an over speed by the effect of a reverse input from the wheels and also for avoiding an accident, which would occur during travel as a result of an abnormality occurring in the electric drive motor.

For the clutch referred to above, either a dog clutch or a friction clutch is generally utilized. However, with the dog clutch, the number of revolutions on a drive side is required to be strictly synchronized with that on a driven side during coupling of the clutch and, therefore, the control is difficult to achieve. On the other hand, in the case of the friction clutch, although no problem arise as to the synchronization in speed at the time of coupling and decoupling of the clutch, there is the possibility that even when the clutch is decoupled, drive and driven members will not be completely disengaged from each other because of the presence of a viscous fluid within the clutch and, therefore, a portion of the reverse input from the wheel may be transmitted to the electric drive motor.

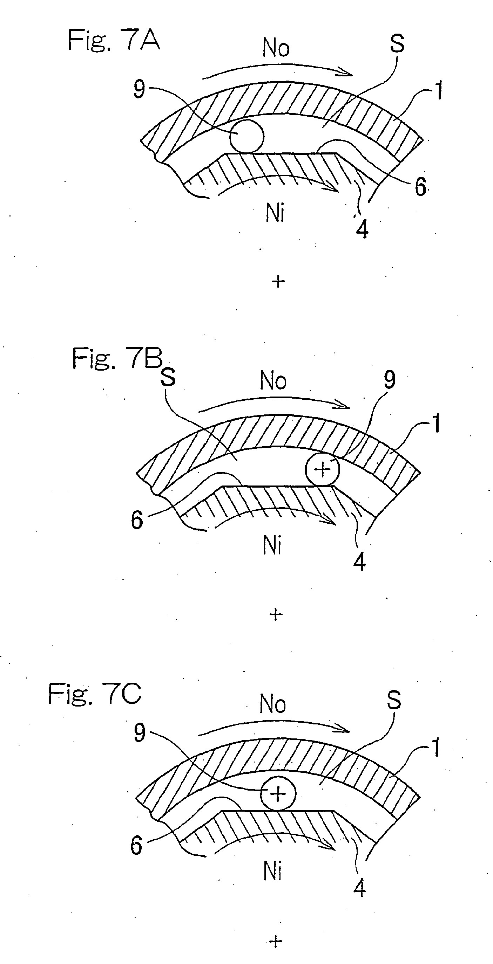

In order to alleviate the problem discussed above, a two-way roller clutch is suggested, for example, in which while as shown in Fig. 7, a wedge shaped engagement space S is defined by each of cam face 6 between an outer member 1, which forms a rotatable member linked with the wheels, and an inner member 4, which forms a rotatable member linked with the electric drive motor, an engagement element 9 in the form of a roller is operatively positioned within this engagement space S.

This suggested roller clutch is so designed that when the retainer (not shown) for retaining the engagement elements 9 is released, the engagement elements 9 are held in a neutral position within the engagement space S, allowing the inner member 4 and outer member 1 to be rotatable independent of each other. When the retainer is constrained by the electromagnet relative to the outer member 1, the inner member and outer member 1 undergo a rotation relative to each other with the engagement elements 9 consequently shifted to either leading or trailing portions within the engagement spaces S with respect to the direction of rotation, enabling a torque transmission.

However, in the suggested roller clutch, even though the electric motor is deenergized to halt to thereby switch the electromagnet off to release the retainer, the engagement elements 9 may often remain locked within the corresponding engagement spaces S with the clutch held in a coupling position. Once the engagement elements 9 are locked in the manner described above with the clutch held in the coupling position, a reverse input from the wheel will act on the electric drive motor.

By way of example, it often occurs that when the automotive vehicle is desired to be stopped, the electric drive motor is halted, but when the automotive vehicle once stopped is desired to be started subsequently, the only combustion engine is operated to drive the automotive vehicle under the two wheel drive mode. In such occasion, if the clutch is kept locked in the coupling position, the reverse input from the wheels acts on the electric drive motor, causing a resistance to the drive afforded by the combustion engine and/or resulting in troubles which may be brought about by an over-speed rotation of the electric drive motor.

In this type of roller clutch discussed above, the JP Laid-open Patent Publication No. 2005-137169, published May 26, 2005, suggests to control the clutch in the following manner. According to this published patent document, when the motor drive is determined halted while the automotive vehicle is stopped, the retainer in the clutch is released and subsequently the electric drive motor is halted after the electric drive motor is driven in a direction reverse to the direction of rotation of the electric drive motor assumed by a rotational direction estimating unit.

However, according to the foregoing suggested control method, since the electric drive motor is operated in order to release the clutch during the halt of the automotive vehicle, the electric drive motor is driven to release the clutch regardless of whether the subsequent start of the automotive vehicle takes place under the four wheel drive mode or the two wheel drive mode. Where the automotive vehicle starts under the four wheel drive mode, no problem will arise since even though the clutch is locked, the clutch can be always released from the locked condition when the electric drive motor is operated. For this reason, the electric drive motor tends to be unnecessarily driven during the halt of the automotive vehicle and, therefore, an unnecessary waste of energies, though not great, may result in.

Also, when the electric drive motor is operated in order to release the clutch during the halt of the automotive vehicle, the electric drive motor is driven in a reverse direction after the retainer has been released and, therefore, there is a problem in that release of the clutch from the locked condition is somewhat insufficient.

### SUMMARY OF THE INVENTION

In view of the foregoing, the present invention has for its primary object to provide a motor drive transmission control device for an automotive vehicle of a type having a clutch interposed between an electric drive motor and wheels and including engagement elements interposed within respective engagement spaces delimited between rotatable members that are linked respectively with the electric drive motor and the wheel, in which even though the clutch is locked in the coupling position during the halt of the automotive vehicle, the clutch can be brought assuredly to a decoupling position when the automotive vehicle starts under a two wheel drive mode, such that the clutch can be released from the locked condition without the electric drive motor operated unnecessarily.

Another important object of the present invention is to enable the clutch to be further assuredly brought into the decoupling position even where the electric drive motor is operated to release the clutch during the halt of the automotive vehicle.

In order to accomplish the foregoing objects of the present invention, the present invention is directed to a motor drive transmission control device for an automotive vehicle, which includes an electric motor drive system for transmitting a drive from an electric drive motor to a first wheel, a separate drive system for transmitting a drive from a drive source, separate from the electric drive motor, to a second wheel, and a clutch disposed in the electric motor drive system. The clutch in turn includes a first rotatable member linked with the electric drive motor and a second rotatable member linked with the wheel, the first rotatable member and the second rotatable member being positioned one inside the other relative to each other; a cylindrical surface provided in one of the first and second rotatable members; a plurality of circumferentially spaced cam faces provided in the other of the first and second rotatable members and defining engagement spaces in cooperation with the cylindrical surface; engagement elements interposed within those engagement spaces; a retainer for regulating respective positions of the engagement elements in a circumferential direction; and a retainer constraining mechanism for selectively constraining and releasing the retainer relative to such one of the first and second rotatable members, such that when the retainer is held in a constrained condition by the retainer constraining mechanism, the engagement elements are wedged within the corresponding engagement spaces to enable rotation in one of opposite directions to be transmitted between the first and second rotatable members.

The separate drive system referred to above may be either a combustion engine drive system or a drive system including an additional electric drive motor.

The motor drive transmission control device of the structure described above is featured in the provision of a rotational direction estimating unit and a clutch release unit operable at the time of start of the automotive vehicle under a two wheel drive mode. Specifically, the rotational direction estimating unit is operable to estimate a direction of rotation of the electric drive motor immediately before deactivation of the electric drive motor during a halt of the automotive vehicle or immediately before a halt of the automotive vehicle, and the clutch release unit is capable of causing the retainer constraining mechanism to release the retainer after the electric drive motor has been driven in a direction reverse to that estimated by the rotational direction estimating unit with a torque of a value lower than the torque sufficient to drive the wheels when the automotive vehicle is started through the only separate drive system from a halt of the automotive vehicle.

According to the present invention, when the automotive vehicle is to be started from the halt thereof with the only separate drive system driven, the retainer constraining mechanism is set in position to release the retainer by means of a control performed by the clutch release unit operable at the time of start of the automotive vehicle under a two wheel drive mode, after the electric drive motor has been driven in a direction reverse to that, estimated by the rotational direction estimating unit, with a torque of a value lower than that required to drive the wheels. Because of this, even though the clutch is locked in a coupling position at the time of the halt of the automotive vehicle, the clutch can be released from the locked condition, allowing the clutch to assume a decoupling position assuredly. Accordingly, it is possible to avoid a reverse input from the wheel to reach the electric drive motor. In the event that during, for example, a four wheel drive mode, the automotive vehicle is to be started through the electric motor drive system at the time of start of the automotive vehicle, no clutch locking occurs, since the drive power is transmitted to all the wheel through the clutch. Accordingly, the clutch release unit operable at the time of start of the automotive vehicle under the two wheel drive mode is capable of effecting the drive by the electric drive motor at the time of the automotive vehicle ready to start under the two wheel drive mode for bringing the clutch to the decoupling position and, therefore, it is possible to avoid an unnecessary waste of energies which would occur when the electric drive motor is unnecessarily driven.

In a preferred embodiment of the present invention, in place of the clutch release unit operable at the time of start of the automotive vehicle under a two wheel drive mode, a motor halt processing unit operable to deactivate the electric drive motor during the halt of the automotive vehicle may be employed. This motor halt processing means is operable in response to a motor drive halt command during the halt of the automotive vehicle to cause the electric drive motor to be driven in a direction reverse to the direction of rotation estimated by the rotational direction estimating unit with the torque lower than that required to drive the wheel and, thereafter, to cause the retainer constraining mechanism to release the retainer, followed by a halt of the electric drive motor.

Where the motor halt processing unit is employed in place of the clutch release unit, when a motor halt command, i.e., a command necessary to halt the electric drive motor is issued during the halt of the automotive vehicle, the motor halt processing unit causes the retainer constraining mechanism to release the retainer after the electric drive motor has been driven in a direction reverse to the direction estimated by the rotational direction estimating unit, with the torque of a value lower than that required to drive the wheel, and subsequently halts the electric drive motor. Thus, since the electric drive motor is deactivated after the electric drive motor has been driven in the direction reverse to that assumed immediately before the halt of the electric drive motor during the halt of the automotive vehicle or immediately before the halt of the automotive vehicle, the clutch even though locked in the coupling position can be released from the locked condition, allowing the clutch to assuredly assume the decoupling position. In such case, since the retainer is released after the electric drive motor has been driven in that reverse direction as described above, the clutch can be assuredly set to the decoupling position as compared with the case in which the electric drive motor is driven in that reverse direction in a manner reverse to that described above, that is, after the retainer has been released.

Particularly, even when the clutch is employed of a type, in which the engagement elements are accommodated within the respective engagement spaces delimited between the rotatable members that are linked respectively with the electric drive motor and the wheels and hence decoupling of the clutch tends to be insufficient, the clutch can be further assuredly set to the decoupling position.

The clutch referred to above is preferably employed in the form of an electromagnetically operated roller clutch, in which case the retainer constraining mechanism includes an electromagnet capable of being switched on and off to constrain and release the retainer, respectively, one at a time. According to this structural feature, a control can be easily accomplished at the time the clutch is desired to be set to the coupling position and, the drive member and the driven member can be completely disconnected from each other.

In a further preferred embodiment of the present invention, the clutch may include a switching spring engaged by the retainer and the inner member for applying a spring force biasing the retainer towards a released condition. This is particularly advantageous in that when the supply of an electric power to a coil of the electromagnet is interrupted, the retainer can be returned to the released condition by the effect of an elastic restoring force of the switching spring, allowing the inner member to rotate freely relative to the outer member.

### BRIEF DESCRIPTION OF THE DRAWINGS

In any event, the present invention will become more clearly understood from the following description of preferred embodiments plus further details thereof, when taken in conjunction with the accompanying drawings. In the accompanying drawings, like reference numerals are used to denote like parts throughout the several views, and:
Fig. 1 is a schematic explanatory diagram showing an automobile drive system utilizing the motor drive transmission control device according to a preferred embodiment of the present invention;
Fig. 2 is a flow chart showing the sequence of operation of a clutch releasing unit employed in the motor drive transmission control device and operable at the time of start of the automotive vehicle under a two wheel drive mode;
Fig. 3 is a longitudinal sectional view of the clutch in the motor drive transmission control device;
Fig. 4 is a cross-sectional view taken along the line III-III in Fig. 3;
Fig. 5 is a fragmentary perspective view of the clutch;
Fig. 6(A) is a cross-sectional view taken along the line VI-VI in Fig. 3;
Fig. 6(B) is a view similar to Fig. 6(A), showing an engaged condition;
Figs. 7(A) to 7(C) are fragmentary transverse sectional views showing different positions of engagement elements employed in the clutch, respectively; and
Fig. 8 is a schematic explanatory diagram showing an automobile drive system utilizing the motor drive transmission control device according to another preferred embodiment of the present invention; and
Fig. 9 is a flow chart showing the sequence of operation of a clutch releasing unit employed in the motor drive transmission control device and operable at the time of start of the automotive vehicle under a two wheel drive mode, according to the second embodiment of the present invention.

### DETAILED DESCRIPTION OF THE EMBODIMENTS

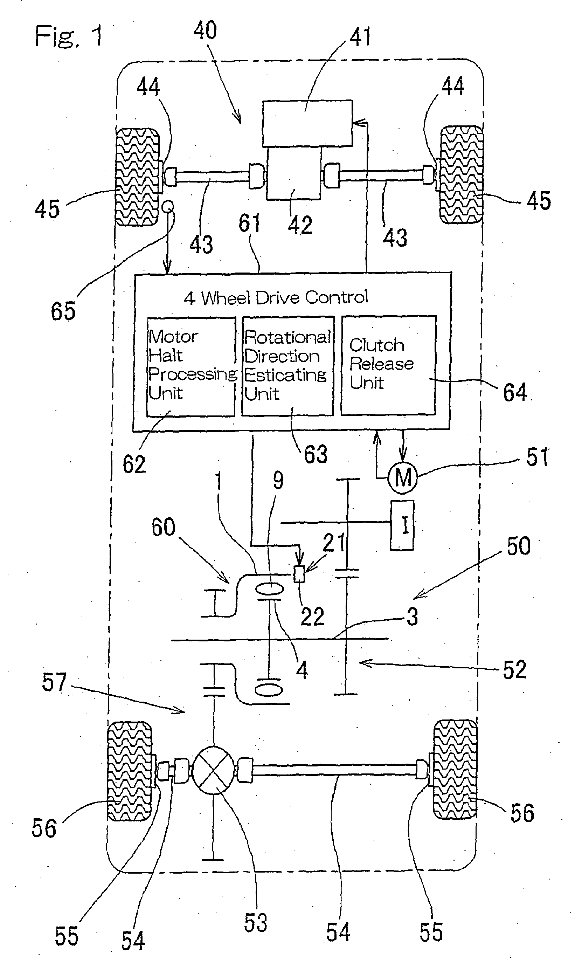

A first preferred embodiment of the present invention will now be described with particular reference to Figs. 1 to 7. Referring to Fig. 1, there is schematically shown a drive system of an automotive vehicle employing the drive transmission control device according to this embodiment of the present invention. The illustrated automotive vehicle is a gas-electric hybrid car including an electric motor drive subsystem 50, having an electric drive motor 51 as a drive source for driving rear wheels of the automotive vehicle, and a combustion engine drive subsystem 40, or a separate drive subsystem, having a combustion engine 41 as a drive source for driving front wheels of the automotive vehicle. The combustion engine drive subsystem 40 is so designed that the torque of the combustion engine 41 can be transmitted to the left and right front wheels 45 through a transmission 42, a drive shaft 43 and a hub bearing unit 44.

The electric motor drive subsystem 50 for the rear wheels is so designed that the driving torque of the electric drive motor 51 can be transmitted to the left and right rear wheels 56 through a reduction gear unit 52, a drive distributing mechanism 53, a drive shaft 54 and a hub bearing unit 55. A clutch 60 is interposed in a rear wheel drive transmitting system 57 for transmitting the drive from the electric drive motor 51 to the rear wheels 56.

The clutch 60 referred to above is an electromagnetically operated roller clutch including a retainer constraining mechanism 21 for selectively constraining and releasing a retainer in response to switching on and off of an electromagnet 22, respectively. The electric drive motor 51 and the clutch 60, both included in the electric motor drive subsystem 50, are adapted to be controlled by a four wheel drive control device 61 including, for example, a computer or the like. As respective parts of this four wheel drive control device 61, a motor halt processing unit 62, a rotational direction estimating unit 63 and a clutch release unit 64 operable at the time of start of the automotive vehicle under a two wheel drive mode, all as will be described later, are employed. This four wheel drive control device 61 is incorporated in, or otherwise mounted on, for example, an electric control unit (ECU) (not shown) of the automotive vehicle.

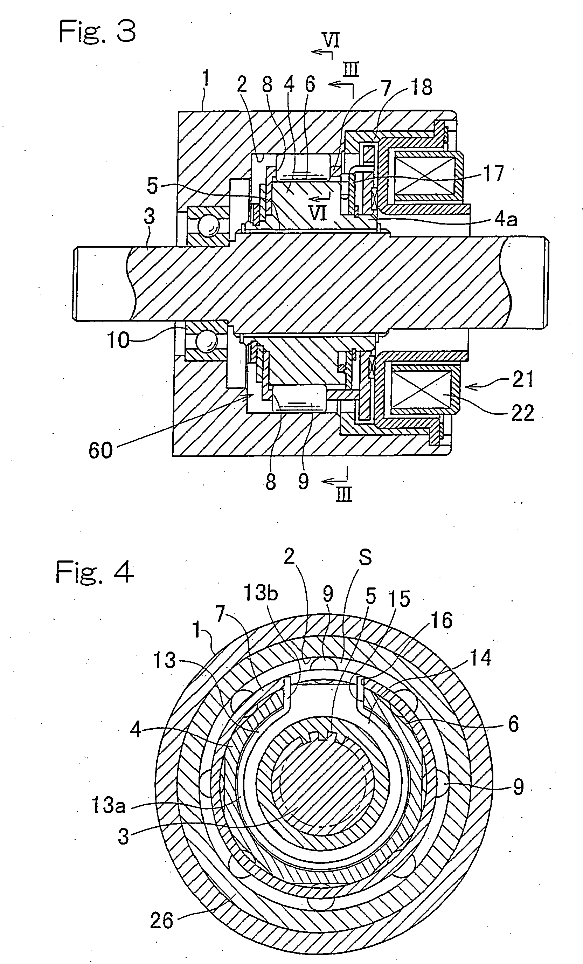

The details of the clutch 60 will now be described with particular reference to Figs. 3 to 7. The illustrated clutch 60 is in the form of an electromagnetically operated roller clutch and includes an outer member 1 forming a rotatable member linked with the wheels and having an input shaft 3 rotatably inserted therein through a bearing 10. The input shaft 3 has an outer periphery, on which an inner member 4, forming a rotatable member linked with the electric drive motor 51, mounted through serrations 5 for rotation together therewith.

The outer member 1 has an inner periphery formed with a cylindrical surface 2. On the other hand, the inner member 4 has an outer periphery formed with a plurality of circumferentially spaced cam faces 6 that define respective engagement spaces S in cooperation with the cylindrical surface 2 of the outer member 1. Each of those engagement spaces S delimited between the cam faces 6 and corresponding portions of the cylindrical surface 2 of the outer member 1 serves as a wedge space of a configuration having a gap size progressively decreasing in two directions circumferentially opposite to each other.

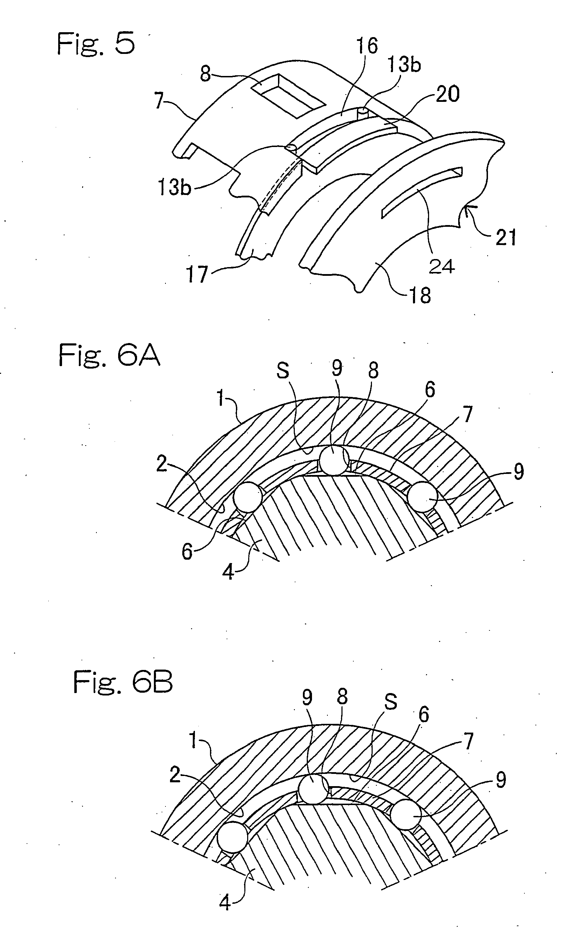

A ring-shaped retainer 7 is incorporated in between the outer member 1 and inner member 4 and is formed with pockets 8 each defined therein at a location confronting the respective cam face 6, and engagement elements 9 each in the form of a roller are rollingly accommodated within those pockets 8. When the inner member 4 and the retainer 7 rotate relative to each other, the engagement elements 9 are engaged in part with the cylindrical surface 2 and in part with the associated cam faces 6 as shown in Fig. 6(B) to thereby transmit rotation of the inner member 4, which rotates together with the input shaft 3, to the outer member 1.

As best shown in Figs. 4 and 5, a switching spring 13 operable to retain the retainer 7 in a neutral position is incorporated in between the retainer 7 and the inner member 4. More specifically, this switching spring 13 is of a generally arcuate configuration made up of an arcuate portion 13 a having its opposite ends formed with engagement pieces 13b that extends generally radially outwardly. This switching spring 13 is accommodated within a spring chamber 14 defined in one end face of the inner member 4 and, in this condition, the engagement 13b are inserted in a cutout 15, defined in a portion of a peripheral wall of the spring chamber 14, and a cutout 16, defined in one end of the retainer 7, and are then held in contact with opposite edges of each of the cutouts 15 and 16 by the effect of an resilient force exerted by such switching spring 13. The neutral position of the retainer 7 is where the engagement elements 9 are disengaged not only from the cylindrical surface 2 but also from the cam faces 6 as shown in Fig. 6(A).

Referring now to Fig. 3, the retainer constraining mechanism 21 for selectively constraining and releasing the retainer 7 relative to the outer member in response to switching on and off of the electromagnet 22, respectively, is provided in between the outer member 1 and the inner member 4. This retainer constraining mechanism 21 is made up of the electromagnet 22, incorporated within on end of the outer member 1, and an armature 18 slidably mounted on a reduced diameter shaft portion 4a of the inner member 4. The armature 18 is restrained by a detent plate 17 from rotating relative to the retainer 7. More specifically, as shown in Fig. 5, the armature 18 has an arcuate engagement groove 24 defined therein, and the detent plate 17 is formed with an arcuate engagement portion 20 axially extending therefrom. The engagement portion 20 is engaged with the arcuate engagement groove 24 so that the armature 18 is restrained from rotating relative to the detent plate 17. Further, the engagement portion 20 of the detent plate 17 is engaged with the cutout 16 defined in the retainer 7 so that the detent plate 17 is restrained from rotating relative to the retainer 7.

The operation of the roller clutch 60 will now be described in detail. Assuming that the input shaft 3 is rotating, when the electromagnet 22 is electrically energized to magnetically attract and, hence, retain the armature 18, the retainer 7 is restrained from rotating and, therefore, the inner member 4 rotating together with the input shaft 3 rotates relative to the retainer 7. At this time, as best shown in Fig. 6(B), the engagement elements 9 are engaged in part with the corresponding portions of the cylindrical surface 2 and in part with the corresponding cam faces 6 and, accordingly, rotation of the inner member 4 can be transmitted to the outer member 1 through the engagement elements 9.

When the inner member 4 and the retainer 7 rotate relative to each other, the cutouts 15 and 16 defined in the inner member 4 and the retainer 7, respectively, are displaced in position in a circumferential direction, accompanied by a resilient deformation of the switching spring 13 that is engaged by the cutouts 15 and 16. Because of this, when the supply of an electric power to an electromagnetic coil of the electromagnet 22 is interrupted, the retainer 7 is returned to the neutral position by the effect of a resilient restoring force of the switching spring 13 and, consequently, the engagement elements 9 are disengaged from the cylindrical surface 2 and also from the cam faces 6, allowing the inner member 4 to rotate freely relative to the outer member 1.

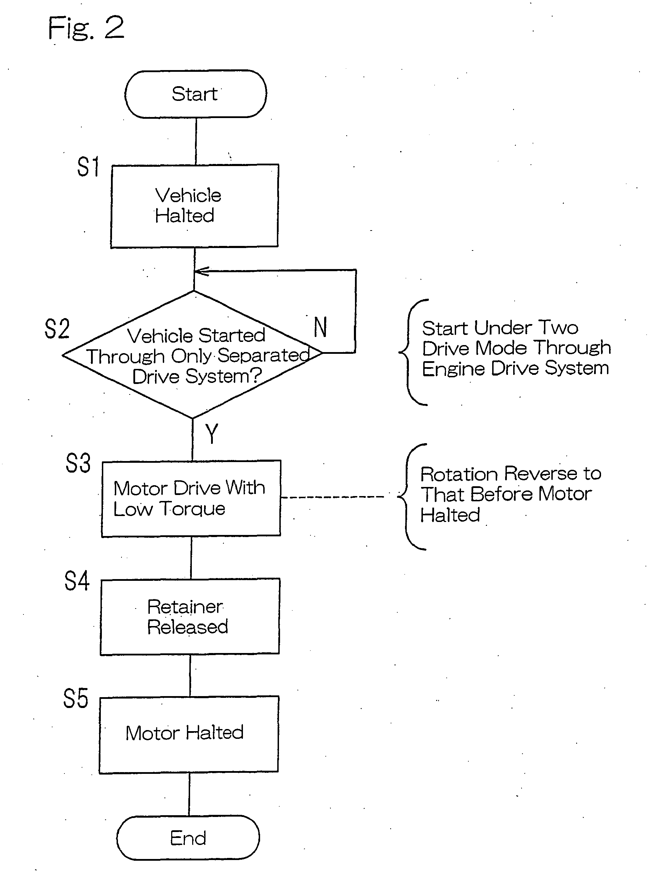

Referring to Figs. 1 and 2, the control system will now be described. The four wheel drive control device 61 referred to previously is provided as a part of the computer type electric control unit (ECU) (not shown) for controlling the combustion engine drive subsystem 40 and the electric motor drive subsystem 50 in their entirety. This four wheel drive control device 61 forms unit for switching between the concurrent use of the combustion engine drive subsystem 40 and the electric motor drive subsystem 50 and the use of one of those drive subsystems 40 and 50. The four wheel drive control device 61 provides a control output according to a preset condition in response to various sensor inputs from, for example, a vehicle speed sensor 65, a rotation sensor for detecting the number of revolutions of the combustion engine 41 and a rotation sensor for detecting the number of revolutions of the electric drive motor 51 and, also, in response to an input provided for by and from a manipulating device, for example, an accelerator pedal, maneuvered by an automotive vehicle driver.

By way of example, when the automotive vehicle is desired to be started from a halted condition, if a vehicle driver selects the four wheel drive mode or an automatic determination is made that it meets with a preset condition for the four wheel drive mode, both of the combustion engine 41 and the electric drive motor 51 are driven to start the automotive vehicle, but where the vehicle driver selects the two wheel drive mode or it does not meet with the preset condition for the four wheel drive mode, only the combustion engine 41 is driven to start the automotive vehicle. When the electric motor 51 is driven for the four wheel drive mode, the four wheel drive control device 61 causes the electromagnet 22 of the retainer constraining mechanism 21 in the clutch 60 to be switched on to constrain the retainer.

The motor halt processing unit 62 performs a predetermined process according to the preset condition to subsequently perform a control necessary to stop the electric drive motor 51, when the four wheel drive mode, in which both of the combustion engine 41 and the electric drive motor 51 are utilized, is switched over to the two wheel drive motor, in which the electric drive motor 51 is deactivated. The predetermined process referred to above includes, for example, releasing the retainer constraining mechanism 21 in response to a motor halt command, subsequently accelerating the electric drive motor 51 so that the rotational speed of the rotatable member 4 linked with the electric drive motor 51 may attain a value higher than that of the rotational member 1 linked with the wheels, and finally stopping the electric drive motor 51. The acceleration of the electric drive motor 51 may be performed before the retainer constraining mechanism 21 is released. In this way, when the clutch 60 is held in a reverse wedged state, as will be described later, while the automotive vehicle runs on a down grade, the clutch 60 can be assuredly disconnected even though the four wheel drive mode is switched over to the two wheel drive mode, in which the electric drive motor 51 is deactivated.

The rotational direction estimating unit 63 referred to previously serves as unit for estimating the direction of rotation of the electric drive motor 51 immediately before the electric drive motor 51 is stopped at the time of halt of the automotive vehicle or immediately before the automotive vehicle stops. This rotational direction estimating unit 63 is operable to monitor at all time the direction of rotation of the electric drive motor 51 and to store the direction of rotation of the electric drive motor 51, at the time the automotive vehicle is determined stopping, as the direction of rotation of the electric drive motor immediately before the stoppage of the automotive vehicle. The stoppage of the automotive vehicle can be determined when, for example, the vehicle speed sensor 65 detects a zero speed. Also, the rotational direction estimating means 63 stores the direction of rotation of the electric drive motor 51 assumed immediately before the halt of the electric drive motor 51, when the electric drive motor 51 is deactivated during the stoppage of the automotive vehicle.

The clutch releasing unit 64 operable at the time of start of the automotive vehicle under the two wheel drive mode serves as unit capable of performing such a control as shown in Fig. 2. More specifically, referring to Fig. 2, when the automotive vehicle then stopping at step S1 is started by the drive transmitted through the engine drive subsystem 40 at step S2, the electric drive motor 51 is driven at step S3 in a direction reverse to the direction of rotation of the electric drive motor 51 assumed by the rotational direction estimating unit 63. At this time, the torque of the electric drive motor 51 is of a value lower than the torque sufficient to drive the wheels 56 and low enough to compensate or minimize a play occurring in various parts inside the clutch 60 and others included in the rear wheel drive transmitting system 57 of the motor drive subsystem 50. This clutch releasing unit 64 operable at the time of start of the automotive vehicle under the two wheel drive mode thereafter causes the electromagnet 22 of the retainer constraining mechanism 21 to be switched off to release the retainer 7 at step S4, bringing the electric drive motor 51 to a halt at step S5.

Hereinafter, the condition of the clutch 60 without the control shown in Fig. 2 and that of the clutch 60 being controlled as shown in Fig. 2 will be described with particular reference to Fig. 7. In the four wheel drive mode before the halt of the automotive vehicle, the retainer 7 is constrained relative to the outer member 1. In this condition, the clutch 60 is in such a condition that due to the difference between the rotational speed Ni of the inner member 4, which is the rotatable member linked with the electric drive motor 51, and the rotational speed No of the outer member 1, which is the rotatable member linked with the wheels, the engagement elements 9 are engaged displaced towards a leading or trailing side within the corresponding engagement spaces S. By way of example, during the travel of the automotive vehicle driven by the electric drive motor 51 during the forward run thereof, the engagement elements 9 are locked (wedged) within the engagement space S on the trailing side with respect to the direction of rotation of the inner member 4 as shown in Fig. 7(A). This condition is referred to as a "positively wedged state". However, when the automotive vehicle runs on a steep down grade, the rotational speed No of the outer member 1 may often become higher than the rotational speed Ni of the inner member 4 and under such condition, the engagement elements 9 are locked (wedged) within the engagement space S on the leading side with respect to the direction of rotation of the inner member 4 as shown in Fig. 7(B). This condition shown in Fig. 7(B) is referred to as a "negatively or reversely wedged state".

Since when the electric drive motor 51 is deactivated, the clutch 60 releases the retainer 7, the wedged engagement is relieved as shown in Fig. 7(C) even when the clutch 60 is held in either the positively wedged state as shown in Fig. 7(A) or the reversely wedged state as shown in Figs. 7(B), and as a result the clutch 60 is in position to disconnect the transmission of the torque. But depending on various situations when the electric drive motor 51 is deactivated, it may often occur that the clutch 60 is locked in either the positively wedged state as shown in Fig. 7(A) or the reversely wedged state as shown in Figs. 7(B) to keep the coupling position.

In such case, when the automotive vehicle is stopped, the clutch 60 assumes either the positively wedged state as shown in Fig. 7(A) or the reversely wedged state as shown in Figs. 7(B).

Also, during the stoppage of the automotive vehicle, when the drive mode changes from the four wheel drive mode to the two wheel drive mode, or when the transmission is set to a parking position or a neutral position, the electric drive motor 51 is deactivated so as to switch over to the two wheel drive mode. At this time, the clutch 60 may be locked in the reverse wedged state.

Because of the foregoing, when starting from the halted condition the automotive vehicle is started under the two wheel drive mode, in which only the combustion engine drive subsystem 40 is in operation, a reverse input torque from the wheels is transmitted to the electric drive motor 51, resulting in the possibility of occurrence of various troubles.

In view of the foregoing, in this embodiment, when the automotive vehicle is started under the two wheel drive mode, in which only the combustion engine drive subsystem 40 is in operation, the retainer constraining mechanism 21 is set in position to release the retainer after the electric drive motor 51 has been driven in a direction reverse to the direction of rotation of the electric drive motor 51, assumed by the rotational direction estimating unit 63, with a torque of a value lower than that required to drive the wheels 56, but of a value enough to compensate or minimize a play occurring in various parts of the electric motor drive subsystem 50. Because of this, even though the clutch 60 is locked in the coupling position, the locked condition is released, allowing the clutch 60 to be assuredly held in the decoupling position.

It is to be noted that although during the travel of the automotive vehicle it is often impossible to determine in which one of directions opposite to each other the clutch 60 is locked under the wedged state, at the time of or immediately before the halt of the automotive vehicle the clutch 60 assumes a speed which is low enough to allow the rotational speed of the outer member 1, which is the rotatable member linked with the wheels, to be zero or to be regarded as zero. Because of this, even though the clutch 60 is locked under the wedged state, the wedged state, under which the clutch 60 is locked, takes place in a positive direction with respect to the direction of rotation of the electric drive motor 51 immediately before the halt. Accordingly, when the electric drive motor 51 is driven in the direction reverse to the direction of rotation estimated by the rotational direction estimating unit 63, the clutch 60 can be released from the locked condition.

As described above, even though the clutch 60 is locked in the coupling position at the time of the halt of the automotive vehicle, the clutch 60 can be released from the locked condition when the automotive vehicle is started under the two wheel drive mode, in which the combustion engine drive subsystem 40 is in operation with the clutch 60. As a result, the clutch 60 is assuredly switched to the decoupling position and accordingly, during the travel of the automotive vehicle under the two wheel drive mode, transmission of the reverse input torque from the wheels to the electric drive motor 51 can be prevented.

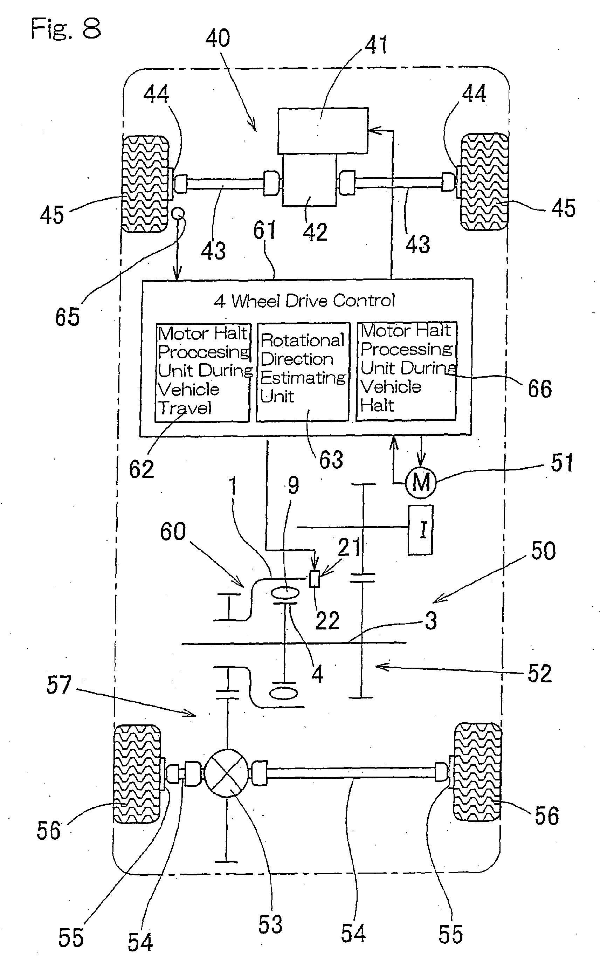

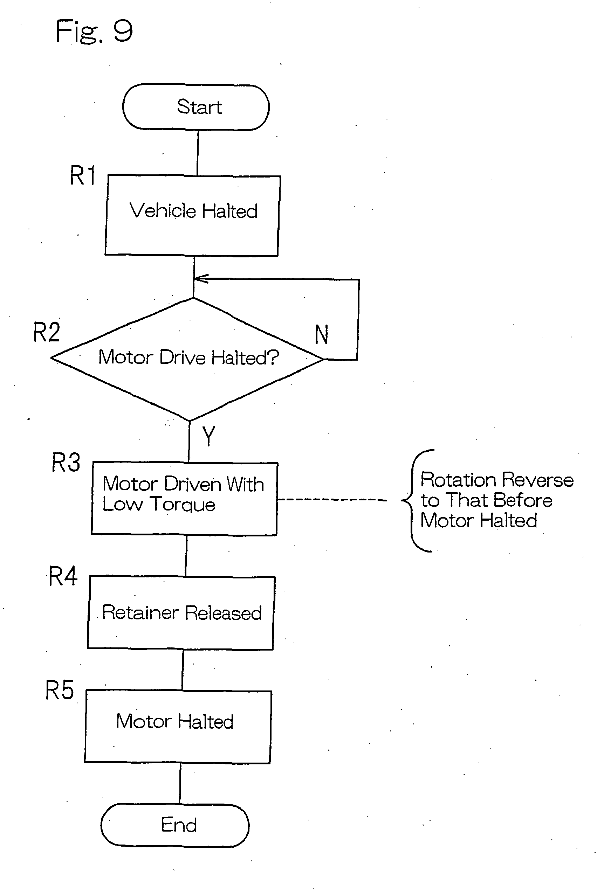

Figs. 8 and 9 illustrates a second preferred embodiment of the present invention. This second embodiment is substantially similar to that according to the first embodiment shown in and described with reference to Figs. 1 to 7, except that in place of the clutch release unit 64, which is operable at the time of start of the automotive vehicle under a two wheel drive mode, a motor halt processing unit 66 shown in Fig. 8 and operable to deactivate the electric drive motor 51 during the halt of the automotive vehicle is employed. Other structural features and effects than those described above are substantially similar to those in the first embodiment of the present invention and, therefore, the details thereof are not reiterated for the sake of brevity.

The motor halt processing unit 66 operable to deactivate the electric drive motor 51 during the halt of the automotive vehicle serves as unit for accomplishing such a control as shown in the flow chart of Fig. 9. Specifically, this motor halt processing unit 66 when receiving a motor drive halt command during the halt of the automotive vehicle at step R1 causes the electric drive motor 51 to be driven at step R3 in a direction reverse to the direction of rotation estimated by the rotational direction estimating unit 63. At this time, the torque of the electric drive motor 51 is of a value lower than the torque required to drive the wheels 56 and of a value enough to minimize a play occurring in various parts of the clutch 60 in the rotation transmitting system 57 of the electric motor drive subsystem 50. After this drive of the electric drive motor 51, the electromagnet 22 of the retainer constraining mechanism 21 is switched off to release the retainer at step R4, followed by halt of the electric drive motor 51 at step R5.

As described above, even in the case where during the halt of the automotive vehicle, after the electric drive motor 51 has been driven in a direction reverse to the direction of rotation estimated by the rotational direction estimating unit 63, the clutch 60 is held in position to release the retainer 7 with the electric drive motor 51 consequently deactivated, even though the clutch 60 is locked in the coupling position, the locked condition is released, allowing the clutch 60 to be assuredly held in the decoupling position. Because of this, even when the automotive vehicle is started under the two wheel drive mode, in which only the combustion engine drive subsystem 40 is in operation, transmission of the reverse input torque from the wheels to the electric drive motor 51 can be prevented, thereby eliminating any possible troubles brought about by the reverse input on the electric drive motor 51. In such case, since such a procedure is taken as to release the retainer 7 after the electric drive motor 51 has been driven at a low torque, the release of the clutch 60 then locked in the coupling position can be accomplished further assuredly.

It is to be noted that in describing any one of the foregoing embodiments of the present invention, though the clutch 60 has been shown and described as having the inner member 4 serving as the rotatable member linked with the electric drive motor 51, the inner member 4 may be the rotatable member linked with the wheels.

Also, although in the foregoing embodiment, reference has been made to the gas-electric hybrid car of a type utilizing the combustion engine 41 and the electric drive motor 51, the present invention can be equally applied to an automotive vehicle of a type that is operated only with the electric drive motor 51 and also to an automotive vehicle of a type that makes use of the electric drive motor 51 with an additional electric drive motor (not shown) for driving different wheels 45.

## Claims

1. A motor drive transmission control device for an automotive vehicle, which comprises:
an electric motor drive system for transmitting a drive from an electric drive motor (51) to a first wheel;
a separate drive system for transmitting a drive from a drive source; separate from the electric drive motor, to a second wheel; and
a clutch (60) disposed in the electric motor drive system;
the clutch comprising a first rotatable member (4) linked with the electric drive motor and a second rotatable member (1) linked with the wheel, the first rotatable member and the second rotatable member being positioned one inside the other relative to each other; a cylindrical surface (2) provided in one of the first and second rotatable members; a plurality of circumferentially spaced cam faces (6) provided in the other of the first and second rotatable members and defining engagement spaces in cooperation with the cylindrical surface; engagement elements (9) interposed within those engagement spaces; a retainer (7) for regulating respective positions of the engagement elements in a circumferential direction; and a retainer constraining mechanism (21) for selectively constraining and releasing the retainer relative to such one of the first and second rotatable members, whereby when the retainer is held in a constrained condition by the retainer constraining mechanism, the engagement elements are wedged within the corresponding engagement spaces to enable rotation in one of opposite directions to be transmitted between the first and second rotatable members;
the motor drive transmission control device being **characterized by** further comprising:
a rotational direction estimating unit (63) for estimating a direction of rotation of the electric drive motor immediately before deactivation of the electric drive motor during a halt of the automotive vehicle or immediately before a halt of the automotive vehicle, and
a clutch release unit (64) operable at the time of start of the automotive vehicle under a two wheel drive mode, the clutch release unit being capable of causing the retainer constraining mechanism to release the retainer after the electric drive motor has been driven in a direction reverse to that estimated by the rotational direction estimating unit with a torque of a value lower than the torque sufficient to drive the wheels when the automotive vehicle is started through the separate drive system from a halt of the automotive vehicle.

2. The motor drive transmission control device for an automotive vehicle as claimed in Claim 1, wherein in place of the clutch release unit operable at the time of start of the automotive vehicle under a two wheel drive mode, a motor halt processing unit (62) operable to deactivate the electric drive motor during the halt of the automotive vehicle is employed, which motor halt processing unit is operable in response to a motor drive halt command during the halt of the automotive vehicle to cause the electric drive motor to be driven in a direction reverse to the direction of rotation estimated by the rotational direction estimating unit with the torque lower than that required to drive the wheel and, thereafter, to cause the retainer constraining mechanism to release the retainer, followed by a halt of the electric drive motor.

3. The motor drive transmission control device as claimed in Claim 1 or 2, wherein the clutch is an electromagnetically operated roller clutch and the retainer constraining mechanism comprises an electromagnet capable of being switched on and off to constrain and release the retainer, respectively, one at a time.

4. The motor drive transmission control device as claimed in any one of Claims 1 to 3, wherein the clutch comprises a switching spring engaged by the retainer and the inner member for applying a spring force biasing the retainer towards a released condition.
